# EUROPEAN PATENT APPLICATION

(11) **EP 4 830 548 A1**
(43) Date of publication of application: **28.10.2026**
(21) Application number: 25218082.3
(22) Date of filing: 24.11.2025
(51) Int. Cl.: A24F 40/40, A24F 40/10

(54) **ATOMIZATION DEVICE**

(30) Priority: 22.04.2025 CN 202520774207 U
(71) Applicant: Shenzhen Geekvape Technology Co., Ltd., Shenzhen, Guangdong 518100 (CN)
(72) Inventor: GUO, Mantang, Shenzhen, Guangdong, 518100 (CN); ZHANG, Yansheng, Shenzhen, Guangdong, 518100 (CN)
(74) Representative: Qip Patent & Recht Dr. Kuehn & Partner mbB

(57) **Abstract**

An atomization device (1) is provided, applied to the field of atomization technologies. The atomization device (1) includes a battery (12) and a controller (11) provided with a first slot (111), the first slot (111) is configured to allow insertion and removal of the battery (12), and a side surface of the battery (12) is detachably connected to a side surface of the first slot (111). In this way, the user can conveniently replace the battery (12), and an additional connection structure is avoided on the outer surface of the atomization device (1), so that the atomization device (1) as a whole can still maintain a good appearance and smoothness, which is convenient for the user to hold.

## Description

### TECHNICAL FIELD

The invention relates to the field of atomization technologies, and in particular relates to an atomization device.

### BACKGROUND

A structure of a conventional atomization device typically features a non-removable battery structure equipped with a rechargeable function, allowing the device to be recharged to restore its capacity when the battery is depleted.

However, in the non-detachable battery structure, the atomization device becomes inoperable once the battery is depleted, requiring users to wait until it is fully recharged before resuming use, resulting in an inconvenient experience.

### SUMMARY

The invention is set out in the appended set of claims.

Embodiments of the invention provide an atomization device, which can solve the technical problem that the non-detachable battery structure results in an inconvenient experience.

In order to achieve the above object, the invention provides an atomization device, including:
a battery; and
a controller, where the controller is provided with a first slot, the first slot is configured to allow insertion and removal of the battery, and a side surface of the battery is detachably connected to a side surface of the first slot.

The atomization device in the invention includes the controller and the battery, and the controller is provided with the first slot. By controlling the side surface of the battery to be detachably connected to the side surface of the first slot, the user can conveniently realize the replacement of the battery, thereby improving the use experience of the user. In this way, it is avoided to provide an additional connection structure on the outer surface of the atomization device, so that after the battery is connected to the controller, the overall atomization device can still maintain a good appearance and smoothness, which is convenient for the user to hold.

### BRIEF DESCRIPTION OF THE DRAWINGS

In order to explain the technical solutions in the embodiments of the invention more clearly, the following will briefly introduce the drawings needed to describe the embodiments, and it should be appreciated that the accompanying drawings in the following description are only some of the embodiments of the invention, and other accompanying drawings can be obtained according to these drawings by the person skilled in the art without putting in creative labor.

For a more complete understanding of the invention and its beneficial effects, the following description will be made in combination with the accompanying drawings, and the same reference numerals refer to the same portions in the following description.
FIG. 1 is a schematic view of an atomization device according to an exemplary embodiment of the invention.
FIG. 2 is an exploded view of an atomization device according to an exemplary embodiment of the invention.
FIG. 3 is a schematic view of another atomization device according to an exemplary embodiment of the invention.
FIG. 4 is a schematic exploded view of a battery according to an exemplary embodiment of the invention.
FIG. 5 is a cross-sectional view of a controller according to an exemplary embodiment of the present invention.
FIG. 6 is an enlarged view of a portion A in FIG. 4.
FIG. 7 is a schematic view of a protrusion and a limiting groove according to an exemplary embodiment of the invention.
FIG. 8 is a schematic view of yet another atomization device according to an exemplary embodiment of the invention.

Description of reference numerals:
1, atomization device;
11, controller; 111, first slot; 1111, first limiting structure; 11111, limiting groove; 11111a, third guide surface; 112, second slot; 113, third magnetic member; 114, housing; 115, partition plate; 116, inner shell; 117, circuit board assembly; 118, first electrode assembly; 119, second electrode assembly; 120, air regulating member;
12, battery; 121, second limiting structure; 1211, protrusion; 1211a, first guide surface; 1211b, second guide surface; 122, first end face; 123, second end face; 124, housing; 1241, light-transmitting hole; 125, cell; 126, battery cell main board; 127, separator; 128, charging interface;
13, atomizer; 131, third slot.

### DETAILED DESCRIPTION

Below, the technical solutions in the embodiments of the invention will be clearly and completely described in conjunction with the accompanying drawings. Obviously, the described embodiments are part of, but not all of, the embodiments of the invention. Based on the embodiments in the invention, all other embodiments obtained by those skilled in the art without making creative efforts fall within the scope of protection of the invention.

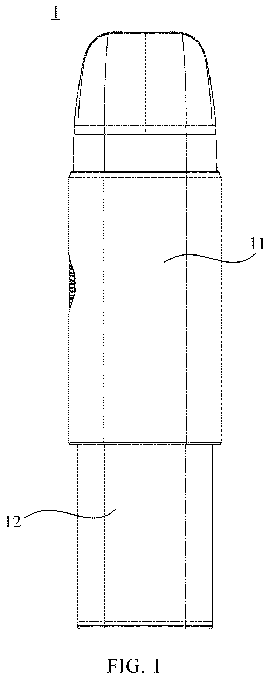

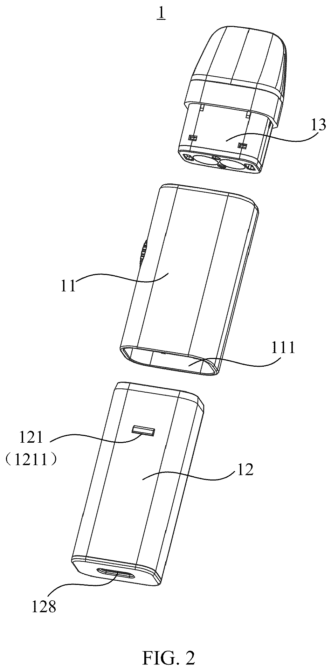

An atomization device 1 is provided in the invention, referring to FIG. 1 and FIG. 2, the atomization device 1 includes a controller 11 and a battery 12, and the controller 11 is provided with a first slot 111. The first slot 111 is configured to allow insertion and removal of the battery 12, and a side surface of the battery 12 is detachably connected to a side surface of the first slot 111.

During use, the user can insert and remove the battery 12 to complete the detachment and replacement of the battery 12 in the atomization device 1. This allows the user to prolong the battery life of the atomization device 1 by replacing the battery 12, thereby accommodating higher frequency usage demands. The controller 11 is configured to control various functions of the atomization device 1, and its specific features can be configured based on design requirements. These may include, for example, the activation and deactivation of the atomization function, adjustment of power levels, and more. The controller 11 is provided with a first slot 111 capable of accommodating at least part of the battery 12. The first slot 111 may be disposed at an end of the controller 11 along a length direction of the controller 11, and the battery 12 may be inserted into the first slot 111 along the length direction of the controller 11, so that the overall shape of the atomization device 1 is a long strip. Alternatively, the first slot 111 may be disposed on a side surface of the controller 11, the battery 12 may be inserted into the first slot 111 from another direction, and in this case, the shape of the atomization device 1 may be L-shaped, V-shaped, or the like, to meet different use requirements of the user.

By controlling the side surface of the battery 12 to be detachably connected to the side surface of the first slot 111 in the atomization device 1 provided by the invention, the user can conveniently realize the replacement of the battery 12, thereby improving the use experience of the user. In this way, it is avoided to provide an additional connection structure on the outer surface of the atomization device 1, so that after the battery 12 is connected to the controller 11, the overall atomization device 1 can still maintain a good appearance and smoothness, which is convenient for the user to hold.

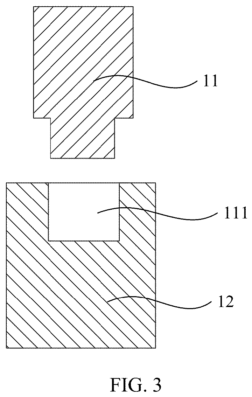

In some optional embodiments, referring to FIG. 3, the first slot 111 may be disposed on one side of the battery 12, at least part of the controller 11 is located in the first slot 111, and the side surface of the controller 11 is detachably connected to the side surface of the first slot 111.

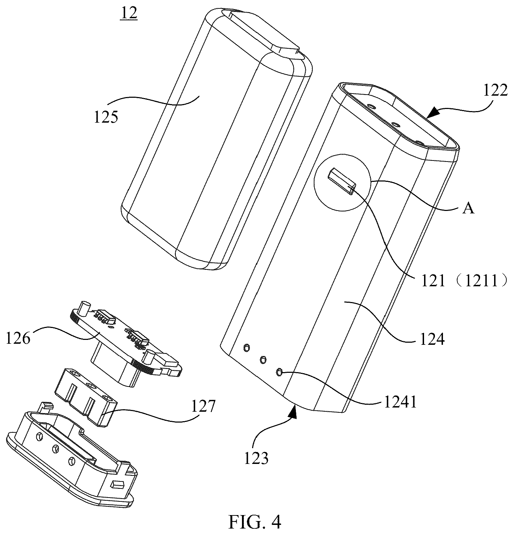

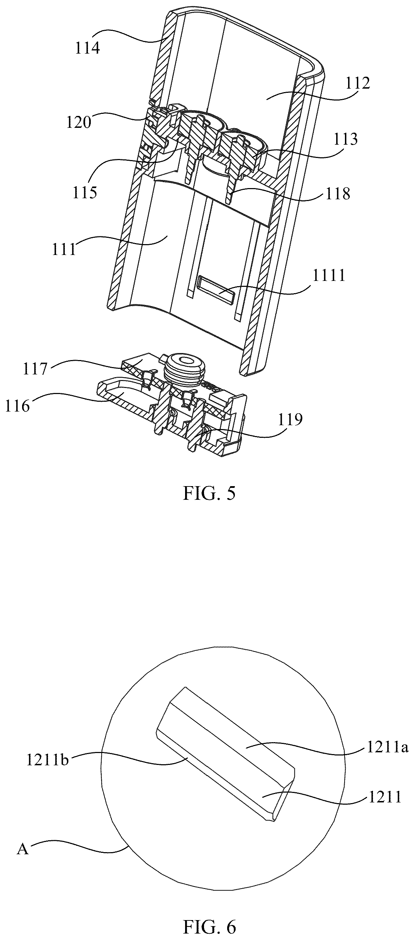

In some embodiments, referring to FIG. 4 and FIG. 5, a side surface of the first slot 111 is provided with a first limiting structure 1111, a side surface of the battery 12 is provided with a second limiting structure 121, and the first limiting structure 1111 is detachably connected to the second limiting structure 121.

During use, when the user inserts the battery 12 into the first slot 111, the first limiting structure 1111 may mat with the second limiting structure 121, to implement connection between the battery 12 and the first slot 111. The first limiting structure 1111 and the second limiting structure 121 may be a buckle structure, or a sticky and reusable adhesive structure, such as Velcro, which is not limited in the embodiments of the invention.

By providing the first limiting structure 1111 and the second limiting structure 121, the manufacturing accuracy requirements for the size of the battery 12 and the size of the first slot 111 can be reduced, thereby reducing the manufacturing cost of the atomization device 1 and improving the stability of the produced product. In addition, a probability of damage caused by squeezing the battery 12 can be reduced during insertion and removal of the battery 12, and the service life of the atomization device 1 can be prolonged.

It can be understood that the detachable connection between the battery 12 and the first slot 111 may be implemented without using an additional connection structure. Exemplarily, the size of the battery 12 may be controlled to be slightly larger than the size of the first slot 111, so that the battery 12 and the first slot 111 can be detachably connected through an interference fit. In this case, there is no need to provide an additional connection structure on the battery 12 and the first slot 111, which reduces the manufacturing cost of the atomization device 1. The connection strength between the controller 11 and the battery 12 may be controlled by adjusting the difference in size between the battery 12 and the first slot 111, which may be adjusted according to the use situation of the atomization device 1, thereby meeting different application scenarios. To facilitate the easy removal of the battery 12 from the first slot 111, the battery 12 may be controlled to be only partially accommodated in the first slot 111. This allows the user to better grip the part of the battery 12 that is exposed outside the first slot 111 and pull the battery 12 out.

In some embodiments, referring to FIG. 4 and FIG. 5, the battery 12 includes a first end face 122 and a second end face 123 opposite to each other, the first end face 122 is located in the first slot 111, the second end face 123 is located outside the first slot 111, and a shortest distance between the second limiting structure 121 and the first end face 122 is less than a shortest distance between the second limiting structure 121 and the second end face 123.

By controlling the position of the second limiting structure 121, the user can compare the distances between the two end faces of the battery 12 and the second limiting structure 121, and the closer end face is the first end face 122, so that the user can conveniently identify the first end face 122, thereby reducing the probability that the user confuses the insertion direction of the battery 12, improving the user experience. Furthermore, the probability that the first limiting structure 1111 and the second limiting structure 121 are damaged due to misalignment of the insertion manner is reduced, and the service life of the two is prolonged.

In some embodiments, referring to FIG. 4 and FIG. 5, one of the first limiting structure 1111 and the second limiting structure 121 is a limiting groove 11111, the other of the first limiting structure 1111 and the second limiting structure 121 is a protrusion 1211, and the protrusion 1211 is detachably connected to the limiting groove 11111.

In the embodiments of the invention, the protrusion 1211 and the limiting groove 11111 are detachably connected through geometric fitting. A shape of the protrusion 1211 may be provided according to a design requirement, and may be a regular structure such as a cylinder or a prism, or may be another irregular shape, for example, the protrusion 1211 may be in an arrow shape, so that when the battery 12 is connected to the first slot 111 by using the protrusion 1211, it can also play a certain indicating role by means of the protrusion 1211, guiding the user to complete the correct insertion operation and improving the user experience.

Due to the simple structure of the protrusion 1211 and the limiting groove 11111, the protrusion 1211 and the limiting groove 11111 can be formed by conventional processing processes such as injection molding or stamping, which has low manufacturing cost and is suitable for mass production. Secondly, after the protrusion 1211 is inserted into the limiting groove 11111, the battery 12 can be limited in multiple directions, thereby effectively preventing the battery 12 from shaking or displacing in the first slot 111, and improving the stability of the connection between the battery 12 and the controller 11.

In some embodiments, referring to FIG. 4 to FIG. 7, the protrusion 1211 includes a first guide surface 1211a, and the first guide surface 1211a is configured to guide the battery 12 to be inserted into the first slot 111.

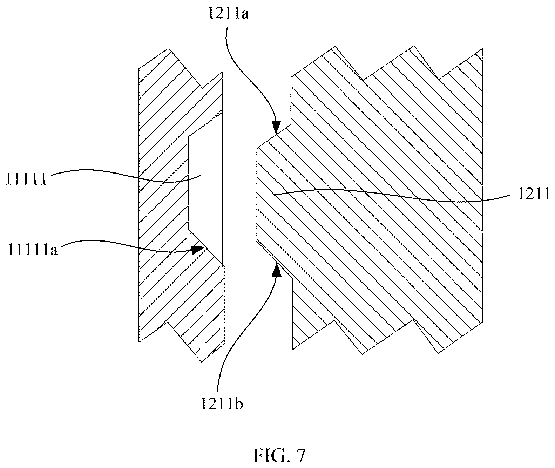

In some embodiments, referring to FIG. 6 and FIG. 7, the protrusion 1211 further includes a second guide surface 1211b, and the second guide surface 1211b is disposed opposite to the first guide surface 1211a for guiding the protrusion 1211 out of the limiting groove 11111.

In some embodiments, referring to FIG. 6 and FIG. 7, the limiting groove 11111 is provided with a third guide surface 11111a corresponding to the second guide surface 1211b, and the third guide surface 11111a can mat with the second guide surface 1211b to guide the protrusion 1211 to disengage from the limiting groove 11111.

Because the protrusion 1211 protrudes from the outer surface of the battery 12, and the protrusion 1211 needs to mat with the limiting groove 11111 in the first slot 111, in a process in which the battery 12 is inserted into the first slot 111, the protrusion 1211 will come into contact with a position in the opening of the first slot 111. Therefore, a first guide surface 1211a may be disposed on the protrusion 1211, and the first guide surface 1211a may be an inclined surface or a curved surface, so that when the battery 12 is inserted into the first slot 111, a smaller part protruding from the outer surface of the battery 12 first enters the first slot 111, and then under the guide of the first guide surface 1211a, the protrusion 1211 is gradually accommodated in the first slot 111 and abuts against an inner wall of the first slot 111 until the protrusion 1211 mats with the limiting groove 11111, so as to implement connection between the battery 12 and the controller 11.

In the embodiments of the invention, the first guide surface 1211a is disposed on the protrusion 1211, so that in a process in which the battery 12 is inserted into the first slot 111, the protrusion 1211 can smoothly enter the first slot 111, thereby improving use experience. In this way, a probability of damage caused by collision between the protrusion 1211 and the controller 11 can be reduced, and a service life of the protrusion 1211 can be prolonged.

When the battery 12 is removed from the first slot 111, the protrusion 1211 may be subjected to resistance from the edge of the limiting groove 11111. Therefore, the second guide surface 1211b may be provided on the battery 12, and when the battery 12 is taken out, the second guide surface 1211b first contacts the edge of the limiting groove 11111. In addition, the second guide surface 1211b may be provided as an inclined surface or a curved surface, so that the protrusion 1211 can be guided to gradually disengage from the limiting groove 11111. In this way, the disengagement process between the protrusion 1211 and the limiting groove 11111 can be smoother and labor-saving, thereby improving the convenience of the disassembly operation of the battery 12, reducing the strength of the collision between the protrusion 1211 and the limiting groove 11111, and prolonging the service life of the protrusion 1211. Furthermore, the third guide surface 11111a may be provided on the limiting groove 11111, and when the battery 12 needs to be taken out, the third guide surface 11111a is in contact with the edge of the protrusion 1211, so that the resistance of the protrusion 1211 during the detachment process is reduced, which ensures the smoothness of detachment of the battery 12, and reduces probability of damage caused by collision between the protrusion 1211 and the limiting groove 11111.

It should be noted that, in the embodiments of the invention, "and/or" describes an association relationship of associated objects, indicating that three relationships may exist, for example, A and/or B may indicate three cases: A exists alone, both A and B exist, and B exists alone.

In some optional embodiments, both the second guide surface 1211b and the third guide surface 11111a may be provided to be inclined surfaces, and inclination angles of the two are the same, so that when the protrusion 1211 is accommodated in the limiting groove 11111, a contact area between the protrusion 1211 and the limiting groove 11111 is relatively large, and the generated resistance is also relatively large, so as to prevent the battery 12 from easily dislodging from the first slot 111. In addition, when the protrusion 1211 is disengaged from the limiting groove 11111, the strength of the collision generated between the protrusion 1211 and the limiting groove 11111 is small, which can further reduce the probability of damage to the protrusion 1211 and the limiting groove 11111, and reduce maintenance or replacement costs caused by damage to the protrusion 1211 or the limiting groove 11111.

In some optional embodiments, along the insertion direction of the battery 12, the height of the protrusion 1211 is between 1.2 mm and 2.5 mm.

If the height of the protrusion 1211 is less than 1.2 mm, the height of the protrusion 1211 is too small, and when the protrusion 1211 is accommodated in the limiting groove 11111, the resistance generated between the protrusion 1211 and the limiting groove 11111 is relatively small, which causes the battery 12 to easily fall out of the first slot 111 due to accidental factors such as collision, affecting normal use of the user. If the height of the protrusion 1211 is greater than 2.5 mm, the protrusion 1211 occupies an excessively large volume, which not only increases the manufacturing cost of the battery 12 but also makes it too difficult to disassemble the battery 12. Therefore, in some embodiments of the invention, the height of the protrusion 1211 is provided to be between 1.2 mm and 2.5 mm, for example, it may be 1.2 mm, 1.3 mm, 1.4 mm, 1.8 mm, 2.0 mm, 2.2 mm, 2.4 mm, 2.5 mm, or the like. This ensures that the protrusion 1211 can effectively fit with the limiting groove 11111, and in this case, it will not make the insertion and extraction of the battery 12 too difficult. Users can relatively easily install and remove the battery 12, which facilitates the use of the atomization device 1.

In some optional embodiments, the atomization device 1 further has a first direction and a second direction perpendicular to the insertion direction of the battery 12, and the first direction and the second direction are perpendicular to each other.

Along the first direction, the length of the protrusion 1211 is between 3.0 mm and 7.0 mm; Along the second direction, the thickness of the protrusion 1211 is between 0.2 mm and 0.6 mm.

If the length of the protrusion 1211 is less than 3.0 mm, the resistance generated between the protrusion 1211 and the limiting groove 11111 is relatively small, which causes the battery 12 to easily fall out of the first slot 111 due to unexpected factors such as collision, affecting normal use of the user. If the length of the protrusion 1211 is greater than 7.0 mm, the protrusion 1211 occupies an excessively large volume, which not only increases the manufacturing cost of the battery 12 but also makes it too difficult to disassemble the battery 12. Therefore, in some embodiments of the invention, the length of the protrusion 1211 is provided to be between 3.0 mm and 7.0 mm, for example, it may be 3.0 mm, 3.5 mm, 4.0 mm, 4.5 mm, 5.0 mm, 5.5 mm, 6.0 mm, 6.5 mm, 7.0 mm, or the like. This ensures that the protrusion 1211 can effectively fit with the limiting groove 11111, and in this case, it will not make the insertion and extraction of the battery 12 too difficult. Users can relatively easily install and remove the battery 12, which facilitates the use of the atomization device 1.

If the thickness of the protrusion 1211 is less than 0.2 mm, the resistance generated between the protrusion 1211 and the limiting groove 11111 is relatively small, which causes the battery 12 to easily fall out of the first slot 111 due to unexpected factors such as collision, affecting normal use of the user. If the thickness of the protrusion 1211 is greater than 0.6 mm, when the battery 12 is inserted into the first slot 111, a strong collision and extrusion is easily generated between the protrusion 1211 and the first slot 111, which greatly improves the probability of damage to the protrusion 1211. Therefore, in some embodiments of the invention, the thickness of the protrusion 1211 is provided to be between 0.2 mm and 0.6 mm, for example, it may be 0.2 mm, 0.3 mm, 0.4 mm, 0.5 mm, 0.6 mm, or the like. This ensures that the protrusion 1211 can effectively mat with the limiting groove 11111, and in this case, the protrusion 1211 is not prone to large damage, and the service life of the protrusion 1211 is prolonged.

In some optional embodiments, both the protrusion 1211 and the limiting groove 11111 are in annular shapes, the protrusion 1211 is disposed along the circumferential direction of the battery 12, and the limiting groove 11111 is disposed along the circumferential direction of the first slot 111. The annular protrusion 1211 and the limiting groove 11111 can provide a uniform pressure around the side surface of the battery 12 when they mats with each other, so that the strength of the connection between the battery 12 and the first slot 111 in each direction is consistent, and the battery 12 will not shift or shake due to uneven force during use, thereby ensuring the stability of the connection between the battery 12 and the controller 11. Further, the shape of the battery 12 and the first slot 111 may be provided to be in cylindrical shapes, so that the battery 12 can be inserted into the first slot 111 from different rotation angles. This reduces the difficulty of fitting the battery 12 with the first slot 111 and simplifies the operation of the user.

In some optional embodiments, the limiting groove 11111 is in an annular shape, a plurality of protrusions 1211 are provided, the plurality of protrusions 1211 are disposed at intervals, and the plurality of protrusions 1211 are detachably connected to the limiting groove 11111. The plurality of protrusions 1211 mate with the annular limiting groove 11111, enabling the connection between the battery 12 and the first slot 111 at multiple points, which disperses the connecting force. Compared with a single protrusion 1211, they can better withstand the external forces on the battery 12 in different directions, reduce the probability of the shaking of the battery 12 due to force, and make the connection between the battery 12 and the controller 11 more stable. Moreover, compared with the annular protrusion 1211, the plurality of protrusions 1211 arranged at intervals use less material, thereby reducing the manufacturing cost of the battery 12.

In some optional embodiments, a plurality of protrusions 1211 and a plurality of limiting grooves 11111 are provided, the plurality of protrusions 1211 are disposed at intervals, the plurality of limiting grooves 11111 are disposed in one-to-one correspondence with the protrusions 1211, and the plurality of protrusions 1211 are detachably connected to the plurality of limiting grooves 11111. The structural distribution of the plurality of protrusions 1211 and the plurality of limiting grooves 11111 ensures a more uniform force distribution between the battery 12 and the slot, preventing localized stress concentration. This design enhances the structural strength of both the battery 12 and the slot, reducing the risk of deformation or damage to the protrusions 1211 and limiting grooves 11111 caused by long-term use. As a result, the overall structure of the atomization device 1 becomes more stable and reliable.

In some optional embodiments, the first limiting structure 1111 is an internal thread, the second limiting structure 121 is an external thread, and the internal thread and the external thread can mat with each other. A relatively large axial force can be generated by closely fitting the internal thread and the external thread, so that a more stable connection is formed between the battery 12 and the controller 11. During use of the atomization device 1, loosening caused by factors such as vibration, shaking, or external force pulling can be effectively resisted, thereby ensuring normal operation of the atomization device 1. It can be understood that, in order to facilitate the threaded fit between the battery 12 and the controller 11, the battery 12 and the first slot 111 are generally in a shape that does not affect rotation, for example, the first slot 111 is provided to be in a cylindrical shape, and the battery 12 may be provided to be in a cylindrical shape or an irregular column with a D-shaped cross section.

In some optional embodiments, one of the first limiting structure 1111 and the second limiting structure 121 is a first magnetic member, the other of the first limiting structure 1111 and the second limiting structure 121 is a second magnetic member, and the first magnetic member and the second magnetic member are magnetically connected. The magnetic attraction between the first magnetic member and the second magnetic member makes the connection between the battery 12 and the first slot 111 very simple, and when the battery 12 is installed, the first magnetic member and the second magnetic member can be automatically connected. only by inserting the battery 12 into the first slot 111, which reduces the installation difficulty of the battery 12 and greatly improves the installation speed. In addition, mechanical friction and wear generated during magnetic connection are relatively small, so that connection performance can be prevented from being affected by wear of a connection component caused by long-term use, which helps to maintain connection stability between the battery 12 and the first slot 111, and prolong a service life of the atomization device 1. The first magnetic member and the second magnetic member may both be magnets, or one is a magnet and the other is a magnetic metal.

In some embodiments, referring to FIG. 1 and FIG. 2, the battery 12 includes a first portion and a second portion connected to each other, the first portion is accommodated in the first slot 111, the second portion is exposed outside the first slot 111, and along a direction in which the battery 12 is inserted into the first slot 111, a length of the first portion is less than a length of the second portion.

Because the length of the second portion is relatively long, when the user removes the battery 12, a space for applying a force is relatively large, so that the user can easily pull out the battery 12 from the first slot 111.

In some optional embodiments, in a direction in which the battery 12 is inserted into the first slot 111, a length of the second portion is controlled to be greater than 2 cm, so as to provide sufficient force application space for the thumb and reduce difficulty of detaching the battery 12.

In some embodiments, referring to FIG. 4, the battery 12 includes a housing 124 and a cell 125, an accommodating cavity is formed in the housing 124, and the accommodating cavity is configured to accommodate the cell 125. The housing 124 is detachably connected to the side surface of the first slot 111. The housing 124 may provide physical protection for the cell 125 from external collision and extrusion, thereby effectively reducing the probability of deformation and damage of the cell 125, and improving the safety and stability of the battery 12. In addition, because the battery 12 is connected to the first slot 111 through the housing 124, if a connection structure between the housing 124 and the first slot 111 is damaged after long-term use, resulting in low connection strength, the housing 124 may be replaced, so as to maintain stability of connection between the battery 12 and the controller 11 and reduce maintenance costs of the battery 12.

In some optional embodiments, the second limiting structure 121 is disposed at a position of the housing 124 corresponding to the cell 125, that is, a position close to the middle of the housing 124, so that when the battery 12 is connected to the controller 11, the second limiting structure 121 is prevented from being too close to the first end face 122, thereby reducing the magnitude of the torque exerted on the second limiting structure 121 under external forces and lowering the probability of damage to the second limiting structure 121.

In some embodiments, referring to FIG. 4, the housing 124 is provided with a light-transmitting hole 1241 communicating with the accommodating cavity. The battery 12 further includes a light-emitting component and a battery cell main board 126, and the light-emitting component is disposed in the accommodating cavity. The battery cell main board 126 is disposed in the accommodating cavity, the battery cell main board 126 is electrically connected to the light-emitting component, the battery cell main board 126 is electrically connected to the cell 125, and the battery cell main board 126 is configured to control the light-emitting component to display in different modes based on the battery level of the cell 125.

The light-emitting component may be displayed in different modes based on the battery level of the cell 125, so that the user can intuitively understand the state of the battery level of the battery 12. Exemplarily, the control mode may be as follows: when the battery level is above 50%, the light-emitting component displays a steady green light; when the battery level is above 20% but equal to or below 50%, the light-emitting component displays a steady yellow light. and when the battery level is equal to or falls below 20%, the light-emitting component displays a steady red light. By providing different display modes, users can keep abreast of the battery level of battery 12 in a timely manner, so that they can prepare for charging in advance and avoid affecting the use of the atomization device 1 due to power exhaustion. It can be understood that the state of the battery level of the battery 12 may be distinguished by various states such as the brightness of the light-emitting component, whether the light-emitting component flashes, and the frequency of the flashing.

In some optional embodiments, the light-emitting component includes a display screen, which can display information such as characters like numbers, letters, or words, allowing users to judge the battery level of the battery cell 125 based on the displayed information.

In some embodiments, referring to FIG. 4, a plurality of light-transmitting holes 1241 are provided, the light-emitting component includes a plurality of lamp beads, the plurality of lamp beads are disposed corresponding to the plurality of light-transmitting holes 1241, the battery 12 further includes a separator 127, and the separator 127 is disposed between the plurality of lamp beads to guide the light emitted by the lamp beads to the corresponding light-transmitting holes 1241.

In the embodiments of the invention, the plurality of lamp beads may be provided to emit light of the same color, and in this case, the control mode of the battery cell main board 126 for the lamp beads may be: when the battery 12 is fully charged, all the lamp beads, such as three lamp beads, are all on; when the battery level of the battery 12 is below 50%, only some of the lamp beads, such as two lamp beads, emit light; and when the battery level of the battery 12 is below 10%, only one lamp bead emits light and continuously flashes. The separator 127 is configured to separate a plurality of lamp beads, so that the lamp beads correspond to the light-transmitting holes 1241, and light emitted by the lamp beads is emitted only through the corresponding light-transmitting holes 1241, thereby reducing a probability that the user is misdirected.

In some optional embodiments, the separator 127 may be made of rubber, and is provided with a groove for accommodating the lamp bead, so that the lamp bead can be well protected while being separated by the separator 127, thereby preventing the battery 12 from being damaged due to unexpected factors such as collision, which could affect the normal use of the battery 12.

In some embodiments, referring to FIG. 2, the battery 12 further includes a charging interface 128, the charging interface 128 is connected to the cell 125, and the charging interface 128 is configured to connect to an external power source to charge the cell 125. The user may charge the battery 12 through the charging interface 128, and reuse the battery 12. It may be understood that when using another electrical device, the user may connect the battery 12 to the another electrical device by the charging interface 128, so as to supply power to the another electrical device by the battery 12.

In some optional embodiments, the charging interface 128 is disposed on an end of the battery 12 away from the controller 11, so that when the battery 12 is inserted into the first slot 111, the battery 12 can be charged, thereby improving user experience.

In some embodiments, the atomization device 1 further includes an atomizer 13, and the atomizer 13 is fixedly connected to the controller 11. The fixed connection ensures a high strength of the connection between the atomizer 13 and the controller 11, which can reduce the probability of loosening of the atomization device 1 after long-term use, thereby improving the stability of the atomization device 1. For example, if the atomizer 13 and the controller 11 are made of materials such as plastic, rubber, or wood, the atomizer 13 and the controller 11 may be fixedly connected through bonding. If the atomizer 13 and the controller 11 are made of materials such as metal or alloy, the fixed connection may be achieved by welding.

In some embodiments, referring to FIG. 2 and FIG. 5, the atomization device 1 further includes an atomizer 13. The controller 11 is provided with a second slot 112, the second slot 112 is spaced apart from the first slot 111, and the atomizer 13 is detachably mounted in the second slot 112.

The atomizer 13 is connected to the controller 11 through the second slot 112, so that at least part of the atomizer 13 is accommodated in the controller 11, thereby improving stability of connection between the atomizer 13 and the controller 11. In addition, the detachable connection ensures that the replacement and maintenance of the atomizer 13 are more convenient. The first slot 111 is spaced apart from the second slot 112, to reduce a probability that the aerosol substrate or the condensate flows to the first slot 111 when the atomization device 1 is used, thereby preventing the aerosol substrate or the condensate from affecting the battery 12 as much as possible, and improving user experience.

In some optional embodiments, referring to FIG. 5, the second slot 112 and the first slot 111 are located at two opposite ends of the controller 11. The first slot 111 and the second slot 112 are respectively disposed at two ends of the controller 11, so that after the atomizer 13 and the battery 12 are mounted, the atomization device 1 is relatively regular as a whole, and the center of gravity is distributed more reasonably, which is convenient for the user to hold, thereby improving the use experience.

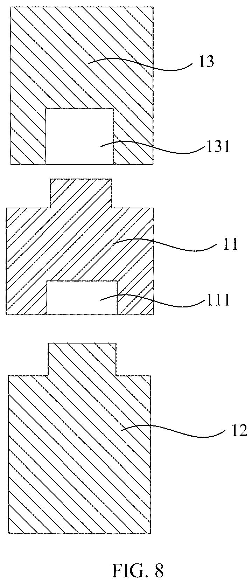

In some optional embodiments, referring to FIG. 8, the atomizer 13 is provided with a third slot 131, and the controller 11 is detachably mounted in the third slot 131. In the embodiments of the invention, the third slot 131 is disposed on the atomizer 13, so that at least part of the controller 11 can be accommodated in the third slot 131, thereby implementing a stable connection between the controller 11 and the atomizer 13. In addition, the detachable connection ensures that the replacement and maintenance of the atomizer 13 are more convenient.

In some optional embodiments, referring to FIG. 5, a third magnetic member 113 is disposed in the second slot 112, the atomizer 13 is provided with a fourth magnetic member corresponding to the third magnetic member 113, and the third magnetic member 113 is magnetically connected to the fourth magnetic member. Therefore, when the atomizer 13 is installed by the user, the atomizer 13 can be accurately adsorbed into the second slot 112 through the attraction force between the third magnetic member 113 and the fourth magnetic member, which is more convenient to operate. When the atomizer 13 is disassembled, the atomizer 13 can be taken out from the second slot 112 only by applying a certain external force to overcome the magnetic force. In addition, mechanical friction and wear generated during magnetic connection are relatively small, so that connection performance can be prevented from being affected by wear of a connection component caused by long-term use, which helps to maintain connection stability between the atomizer 13 and the second slot 112, and prolong a service life of the atomization device 1.

In some optional embodiments, the third magnetic member 113 is in annular shape, so that the third magnetic member 113 can provide uniform magnetism to attract the atomizer 13, thereby improving stability of connection between the atomizer 13 and the controller 11. In addition, since the atomizer 13 needs to be electrically connected to the battery 12, the electrical connection structure may pass through an inner ring of the annular third magnetic member 113, to prevent the third magnetic member 113 from affecting an electrical connection between the atomizer 13 and the battery 12.

In some embodiments, referring to FIG. 5, the controller 11 includes a housing 114, a partition plate 115, an inner shell 116, a circuit board assembly 117, and a first electrode assembly 118, and a connection channel is formed in the housing 114. The partition plate 115 is disposed in the connection channel, and the connection channel is divided into the first slot 111 and the second slot 112 by the partition plate 115. The inner shell 116 is disposed in the connection channel and located between the partition plate 115 and the battery 12. The circuit board assembly 117 is disposed between the partition plate 115 and the inner shell 116. One end of the first electrode assembly 118 is electrically connected to the circuit board assembly 117, and the other end of the first electrode assembly 118 passes through the partition plate 115 and is electrically connected to the atomizer 13.

The partition plate 115 separates the connection channel in the housing 114 of the controller 11 into the first slot 111 and the second slot 112, so that the battery 12 and the atomizer 13 can be carried, and independent mounting spaces are provided for the battery 12 and the atomizer 13, respectively, thereby avoiding mutual interference during mounting.

In some optional embodiments, the partition plate 115 and the housing 114 are integrally formed, thereby improving the structural strength of the controller 11.

The inner shell 116 is configured to mount the circuit board assembly 117, which is typically made of an insulating material. During use, the atomizer 13 is first inserted into the second slot 112, and the atomizer 13 is connected to one end of the first electrode assembly 118. Then the battery 12 is inserted into the first slot 111, so that the battery 12 is connected to the other end of the first electrode assembly 118, thereby facilitating the battery 12 to supply power to the atomizer 13 through the first electrode assembly 118. It can be understood that a plurality of holes may be disposed on the partition plate 115 to adapt to the first electrode assembly 118, so that sealing performance of the partition plate 115 is ensured while the first electrode assembly 118 is installed, and a probability of leakage of the aerosol substrate or the condensate in the atomizer 13 is reduced.

In some embodiments, referring to FIG. 5, the controller 11 further includes a second electrode assembly 119, one end of the second electrode assembly 119 is electrically connected to the circuit board assembly 117, and the other end of the second electrode assembly 119 passes through the inner shell 116 and is electrically connected to the battery 12.

Since the electrical connection position between the battery 12 and the atomizer 13 is prone to variations, the second electrode assembly 119 is provided in the embodiments of the present invention. The second electrode assembly 119 is directly electrically connected to the battery 12, so the position of the second electrode assembly 119 can be determined according to the model of the battery 12. The first electrode assembly 118 is directly electrically connected to the atomizer 13, so the position of the first electrode assembly 118 can be determined according to the model of the atomizer 13. The first electrode assembly 118 is electrically connected to the second electrode assembly 119 through the circuit board assembly 117, so that the battery 12 supplies power to the atomizer 13. By the arrangement of the second electrode assembly 119, when the user replaces batteries 12 of different models, only the second electrode assembly 119 of different types or the circuit board assembly 117 needs to be replaced, without replacing the entire atomization device 1, thereby improving the flexibility of the use of the atomization device 1.

In some optional embodiments, referring to FIG. 5, the housing 114 is provided with an air hole communicating with the second slot 112, the controller 11 further includes an air regulating member 120, and the air regulating member 120 is movably connected to the housing 114, so that at least part of the air regulating member 120 can cover the air hole. There are many ways to connect the air regulating member 120 with the housing 114, for example, the air regulating member 120 is hinged with the housing 114, and when the air regulating member 120 is turned over by a certain angle, the air hole can be covered to seal the air hole. When the air regulating member 120 is reversed, the sealing of the air hole is released. In some embodiments, the air regulating member 120 may be slidably connected to the housing 114, so that when the position of the air regulating member 120 is moved, the air intake volume of the air hole may be adjusted.

In some optional embodiments, a plurality of air holes are provided, and the plurality of air holes are arranged at intervals, the air regulating member 120 is rotatably connected to the housing 114, and when the air regulating member 120 rotates at different angles, different numbers of air holes may be covered, thereby adjusting the air intake volume.

In the description of the invention, it is to be understood that the terms "first", "second" and the like are used for descriptive purposes only and are not to be construed as indicating or implying relative importance or implying an amount of indicated technical features. Thus, features denoted by "first" and "second" may expressly or implicitly include one or a plurality of features. In the description of the invention, "plurality" means two or more, unless expressly and specifically defined otherwise.

In the above embodiments, different parts of the technical solution are given different levels of description in different embodiment, and some features that are not specified in a particular embodiment can be found in the relevant descriptions of other embodiments.

The embodiments, implementations and related technical features of the invention can be combined and replaced with each other without conflict.

What described above are only preferred embodiments of the invention and are not intended to limit the invention in any form. Any simple modification, equivalent change and embellishment to the above embodiments based on the technical essence of the invention without departing from the content of the technical solution of the invention still fall within the scope of the technical solution of the invention.

## Claims

1. An atomization device (1), **characterized by** comprising:
a battery (12); and
a controller (11), wherein the controller (11) is provided with a first slot (111), the first slot (111) is configured to allow insertion and removal of the battery (12), and a side surface of the battery (12) is detachably connected to a side surface of the first slot (111).

2. The atomization device (1) as claimed in claim 1, **characterized in that**
the first slot (111) is configured to accommodate at least part of the battery (12) in a case where the battery (12) is inserted into the first slot (111); and
the side surface of the first slot (111) is provided with a first limiting structure (1111), and the side surface of the battery (12) is provided with a second limiting structure (121), wherein the first limiting structure (1111) is detachably connected to the second limiting structure (121).

3. The atomization device (1) as claimed in claim 2, **characterized in that** the battery (12) comprises a first end face (122) and a second end face (123) opposite to each other, wherein in the case where the battery (12) is inserted into the first slot (111), the first end face (122) is located in the first slot (111), the second end face (123) is located outside the first slot (111), and a shortest distance between the second limiting structure (121) and the first end face (122) along the insertion direction of the battery (12) is less than a shortest distance between the second limiting structure (121) and the second end face (123).

4. The atomization device (1) as claimed in claim 2, **characterized in that** one of the first limiting structure (1111) and the second limiting structure (121) is a limiting groove (11111), another of the first limiting structure (1111) and the second limiting structure (121) is a protrusion (1211), and the protrusion (1211) is detachably connected to the limiting groove (11111).

5. The atomization device (1) as claimed in claim 4, **characterized in that** the protrusion (1211) comprises a first guide surface (1211a), and the first guide surface (1211a) is configured to guide the battery (12) to be inserted into the first slot (111);
preferably, the protrusion (1211) comprises a second guide surface (1211b) opposite to the first slot (111), and the second guide surface (1211b) is configured to guide the protrusion (1211) to disengage from the limiting groove (11111); and
further preferably, the limiting groove (11111) comprises a third guide surface (11111a) corresponding to the second guide surface (1211b), and the third guide surface (11111a) is configured to mate with the second guide surface (1211b) to guide the protrusion (1211) to disengage from the limiting groove (11111).

6. The atomization device (1) as claimed in claim 4, **characterized in that** the protrusion (1211) has a length in a first direction of from 3.0 mm to 7.0 mm, and the protrusion (1211) in a second direction has a thickness of from 0.2 mm to 0.6 mm, wherein the first direction is perpendicular to the second direction, and the first direction and the second direction are perpendicular to an insertion direction of the battery (12).

7. The atomization device (1) as claimed in any one of claims 1 to 6, **characterized in that** the battery (12) comprises a first portion and a second portion connected to each other, wherein in a case where the battery (12) is inserted into the first slot (111), the first portion is accommodated in the first slot (111), the second portion is exposed outside the first slot (111), and in an insertion direction of the battery (12), a length of the first portion is less than a length of the second portion.

8. The atomization device (1) as claimed in any one of claims 1 to 6, **characterized in that** the battery (12) comprises a housing (124) and a cell (125), an accommodating cavity is formed in the housing (124), and the accommodating cavity is configured to accommodate the cell (125);
wherein the housing (124) is detachably connected to the side surface of the first slot (111).

9. The atomization device (1) as claimed in claim 8, **characterized in that** the housing (124) is provided with at least one light-transmitting hole (1241) communicating with the accommodating cavity; wherein the battery (12) further comprises:
a light-emitting component disposed in the accommodating cavity; and
a battery cell main board (126), wherein the battery cell main board (126) is disposed in the accommodating cavity, the battery cell main board (126) is configured to be electrically connected to the light-emitting component, the battery cell main board (126) is configured to be electrically connected to the cell (125), and the battery cell main board (126) is configured to control the light-emitting component to display in different modes based on battery level of the cell (125).

10. The atomization device (1) as claimed in claim 9, **characterized in that** a plurality of light-transmitting holes (1241) is provided, the light-emitting component comprises a plurality of lamp beads corresponding to the plurality of light-transmitting holes (1241), the battery (12) further comprises a separator (127), and the separator (127) is disposed between the plurality of lamp beads to guide light emitted by the lamp beads to the corresponding light-transmitting holes (1241).

11. The atomization device (1) as claimed in claim 8, **characterized in that** the battery (12) further comprises a charging interface (128), the charging interface (128) is connected to the cell (125), and the charging interface (128) is configured to be connected to an external power source to charge the cell (125).

12. The atomization device (1) as claimed in any one of claims 1 to 6, **characterized in that** the atomization device (1) further comprises an atomizer (13), and the atomizer (13) is fixedly connected to the controller (11).

13. The atomization device (1) as claimed in any one of claims 1 to 6, **characterized in that** the atomization device (1) further comprises an atomizer (13); wherein the controller (11) is provided with a second slot (112), the second slot (112) is spaced apart from the first slot (111), and the atomizer (13) is detachably mounted in the second slot (112).

14. The atomization device (1) as claimed in claim 13, **characterized in that** the controller (11) comprises:
a housing (114), wherein a connection channel is formed inside the housing (114);
a partition plate (115) disposed in the connection channel, wherein the connection channel is divided into the first slot (111) and the second slot (112) by the partition plate (115);
an inner shell (116) disposed in the connection channel and located between the partition plate (115) and the battery (12);
a circuit board assembly (117) disposed between the partition plate (115) and the inner shell (116); and
a first electrode assembly (118), wherein an end of the first electrode assembly (118) is electrically connected to the circuit board assembly (117), and another end of the first electrode assembly (118) passes through the partition plate (115) and is electrically connected to the atomizer (13).

15. The atomization device (1) as claimed in claim 14, **characterized in that** the controller (11) further comprises a second electrode assembly (119), an end of the second electrode assembly (119) is electrically connected to the circuit board assembly (117), and another end of the second electrode assembly (119) passes through the inner shell (116) and is electrically connected to the battery (12).
